# EUROPEAN PATENT SPECIFICATION

(11) **EP 0 250 706 B1**
(45) Date of publication and mention of the grant of the patent: **08.12.1993**
(21) Application number: 87101868.5
(22) Date of filing: 11.02.1987
(51) Int. Cl.: G01F 1/84

(54) **Mass Flow Measuring Device**
Einrichtung zum Messen des Massenflusses
Appareil de mesure de débit massique

(30) Priority: 11.02.1986 US 809659; 26.09.1986 US 912893
(43) Date of publication of application: 07.01.1988
(73) Proprietor: ABB K-FLOW INC., Millville, New Jersey 08332 (US)
(72) Inventor: Kane, Martin, Atlantic City New Jersey 08401 (US); Pratt, Wayne, Scottsdale Arizona 85254 (US); József, Alesz, Budapest, 1119 (HU); Lajos, Balázs, Budapest 1112 (HU); Zoltán, Biró, Budapest 1151 (HU); István, Glódi, Budapest 1195 (HU); András, Kiss, Budapest 1022 (HU); Sándor, Kün, Budapest 1022 (HU); Péter, Salamon, Budapest 1138 (HU); Zoltán, Tóth, Budaörs 2040 (HU); Zoltán, Varga, Budapest 1191 (HU); László, Szabó, Budapest 1039 (HU)
(74) Representative: Frohwitter, Bernhard, Dipl.-Ing.

(56) References cited:
- WO-A-86/00699
- GB-A- 2 171 200
- US-A- 2 813 423
- US-A- 2 831 349
- US-A- 4 491 025
- US-A- 4 559 833
- SOVIET INVENTIONS ILLUSTRATED, section E1, week C 51, February 4, 1981 DERWENT PUBLICATIONS LTD., London S 02

## Description

### Background of the Invention

There is known a great variety of mass flow meters that work on the Coriolis principle.

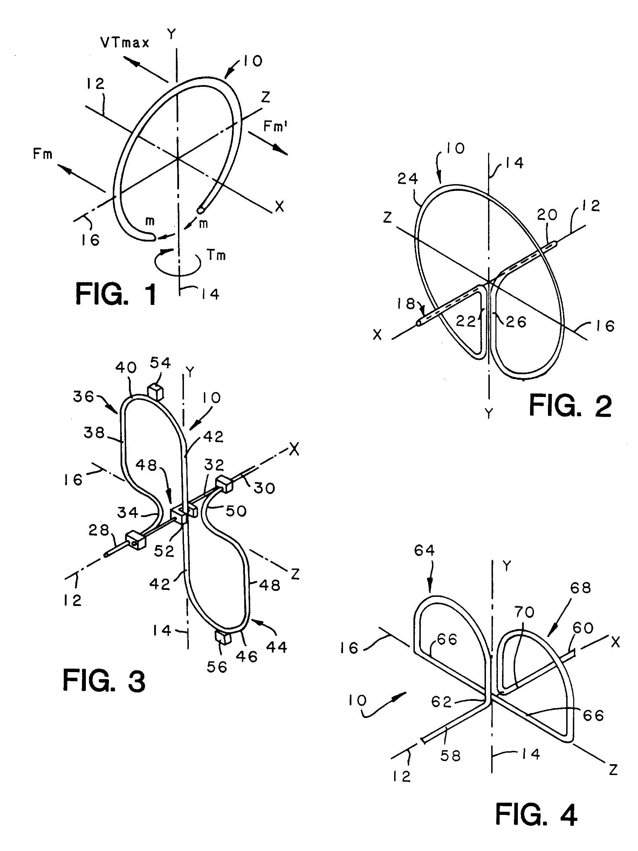

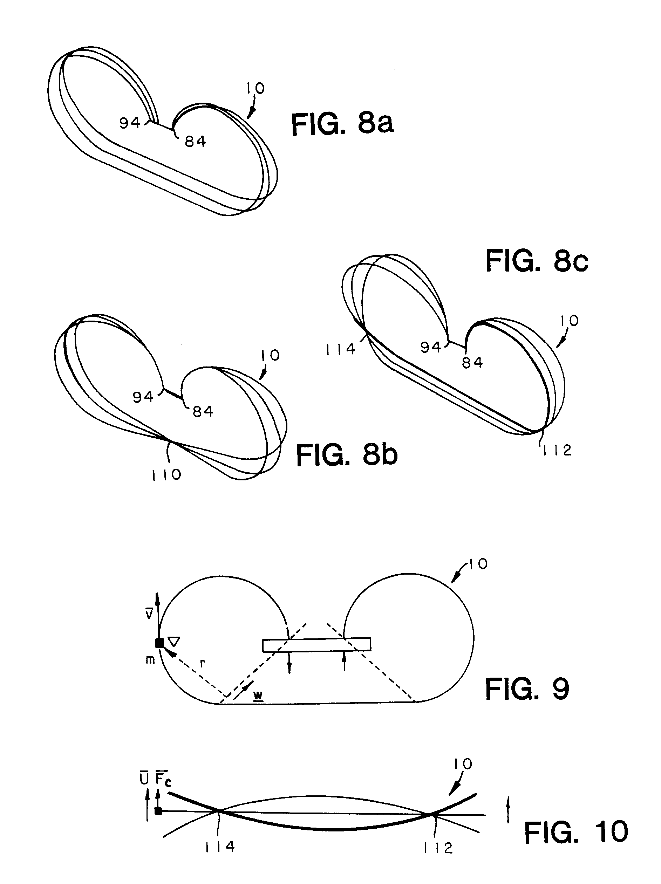

WO-A1-86/00699 shows an apparatus for measuring the mass flow of a fluid stream which comprises an inlet and an outlet positioned substantially along a single axis line. The flow tube between the inlet and the outlet of the conduit forms a loop or loops. A driver imparts an oscillation perpendicular to the fluid flow, and sensing means detect the deflections of the loop in response to the oscillations of the driver means. This reference does not show a symmetrical arrangement of the loops with respect to an axis line. Furthermore, the reference does not show that the overall center of gravity of the loops is juxtaposed to the axis line. In particular, the known structure according to WO-A1-86/00699, Figure 2, fails to disclose a straight connecting portion extending from a first loop portion to a second loop portion. The modification according to Figure 8 (which has a straight connecting portion and two loop portions) falls to disclose a 270° turn in direction and an extension of the straight connecting portion adjacent the axis of the pipeline. In both embodiments the inlet leg portion and the outlet leg portion are not curved.

Soviet Inventions Illustrated, SU-732 672 shows a mass flow meter having an inlet and an outlet which are fixed along a central axis. A driver is positioned on one side of the flow tube structure to rotate the flow tube about the central axis. Only one sensing means is positioned on the flow tube opposite the driver. Furthermore, the configuration formed by the flow tube is not substantially free of restrictions or constraints since the flow tube portions are rigidly attached to one another while forming its overall structure. The document discloses two loops which form an arc of 360° turn in direction. No B-structure of the loops is disclosed.

US-A 4 491 025 shows a mass flow meter in the form of two parallel U-shaped flow tubes which are cantilevered, and thus project from its fixed mounting. This arrangement does not suggest or disclose a symmetrical flow tube arranged with respect to an axis line formed between its fixed mountings. Furthermore, the overall center of gravity of the flow tube structure is not proximate to its fixed mounting or its center line.

US-A-4 559 833, Figure 9 discloses a flow tube which has an inclined S-shape. The known S-shape is formed in a plane which is in-line with the axis of the pipeline. The known loops form an arc of 180° turn in direction. The document discloses no B-structure. Furthermore, this reference does not define a loop which is symmetrical about an axis line defined by the inlet end and the outlet end of the flow tube.

GB-A-2 171 200 shows a mass flow meter having two parallel straight flow tubes which are connected to a flow converging manifold at opposite ends. Thus, there is no loop structure. The reference further shows the oscillation of the flow tubes at the fundamental resonant frequency as well as the simultaneous oscillation at a resonant frequency higher than the fundamental. The reference does not suggest or disclose a vibrational wave pattern having nodes, local minimum amplitudes of vibration, local maximum amplitudes of rotation, or local maximum amplitudes of oscillation. Furthermore, with respect to the positioning of the overall center of gravity of the flow tube, it is not juxtaposed to the fixed inlet and outlet end of the flow tube.

US-A-2 813 423 and US-A-2 831 349 show a mass flow measurement apparatus comprising a sensing coil which is rotated. The references do not show, however, perpendicularly acting driver means or sensing means. A symmetrical arrangement of the loop is also not present in these citations. US-A-2 813 423 discloses a loop of 180° and a second loop of 360° which are connected by another loop 36 which is not in the plane of the first and the second loop. US-A-2 831 349, Figure 1 discloses a single-plane configuration of a loop structure. There is no central housing and no inlet channel which deflects the fluid stream away from the axis of the pipeline.

The Coriolis type mass flow meter of the present invention works on the principle that a fluid flow within a flow tube or conduit, which is subject to an oscillation transverse to the direction of flow will react against the flow tube with a measurable force. A flow tube which is transversely oscillated at its center experiences an increasing gradient of transverse velocity from the entrance or inlet end of the flow tube to a point of maximum velocity at the position where the oscillation is applied. Additionally, there is a decreasing transverse velocity gradient from the central or applied oscillation position to the outlet end of the flow tube. The fluid within the flow tube reacts to this velocity gradient to create a transverse reaction force, which is also in the form of a gradient, in one direction from the inlet end to the center position and in the opposite direction from the center to the outlet end. The resultant reaction on the flow tube is directly related to the mass flow rate within the flow tube.

The form of the flow tube, the materials and thickness of the tubing and the nature of flow tube oscillation greatly affect the measurability of the Coriolis reaction of the fluid and thus the sensitivity of the mass flow measurement. External noise created by mechanical machinery and other equipment within the flow meter environment as well as internal noise created by the oscillation of the flow meter tubing, also greatly affect the accuracy of the mass flow determination. The present invention relates to increasing the sensitivity of the Coriolis force measurement while limiting the effect of noise during the sensing of the Coriolis reaction.

### Summary of the Invention

This object is achieved by an apparatus for measuring mass flow of a fluid stream in a pipeline, comprising the features of claim 1.

The preferred embodiment of the present invention includes a conduit which is typically positioned within a pre-existing pipeline or defined fluid stream. The conduit also includes an inlet and an outlet which, preferably, are arranged axially with respect to one another and with the pipeline or defined fluid stream. The conduit also includes a substantially flexible flow tube which directs the flow from the inlet of the conduit through at least one loop and returns the flow to the defined fluid stream. The loop portion of the flow tube is free-floating, that is, free of restrictions or constraints along its peripheral length and is formed symmetrically between its inlet and outlet ends.

A free-floating loop reduces the spring constant of the flow tube and, therefore, reduces its resistance to deflection to that it is free to react along with the Coriolis force of the fluid. Additionally, a free floating loop that is formed symmetrically about a central axis or about its center of gravity, as compared to a cantilevered or rigid form, reduces the effect of external noise on the flow tube and its effect on the sensing of the Coriolis reaction force. Also, a symmetrical flow tube formed about a single axis line (such as the axial line of the defined fluid stream or the line between the inlet and the outlet of the conduit), is stabilized with respect to its fixed mounting so that both internal and external noise affect the flow tube substantially equivalently at all positions. Symmetrical formation of the flow tube further enhances the sensitivity and accuracy of the meter.

One preferred embodiment of the present invention may take the form of a continuous flow tube having an inlet and an outlet leg portion which deflect the flow from the axial line of the defined fluid stream into a loop which is formed symmetrically about the axial line and substantially within a plane perpendicular to this axial line. The inlet and outlet leg portions may deflect the flow into the loop in any desired manner so as to increase the flexibility of the free floating loop as well as its ability to respond to the Coriolis reaction of the fluid. The inlet and outlet leg portions in this embodiment are also free floating along with the flow tube loop. The symmetrical form may include a continuous flow tube having two loops which are symmetrically positioned with respect to the axial line and may take the form of a figure "8". The fluid flow is deflected from the axial line by means of inlet and outlet leg portions and through two substantially 270° arcs. The portion of the flow tube between the two loops in this embodiment preferably crosses the axial line substantially perpendicular thereto. The applied oscillation of the flow tube may be directly along the axial line so as to completely eliminate flexure of the flow tube by the driver about a fixed mounting of the flow tube ends. This structure including two flow tube loops may also take the form of a "B"-shaped design.

Another embodiment of the invention may form a substantially "B"-shaped design having one or more continuous and flexible flow tubes which are fixedly attached at the vertex of the "B"-shape to a housing. The flow tubes communicate with the defined fluid stream through internal channels within the housing. The internal channels may split the flow to form substantially equivalent flow streams which are directed through the flow tubes. The two flow tubes are formed substantially identical to one another and are positioned parallel to one another. The symmetrical flow tubes are formed about the housing and each have a center of gravity formed closely adjacent or proximal to its mounting on the housing and, preferably, proximal to the axial line of the defined fluid stream. Additionally, the oscillation of the flow tube is preferably applied at a position closely adjacent the housing and the center of gravity of the flow tubes.

Sensing means of any convenient type may be provided for measuring the Coriolis reaction such as the sensors which produce signals representative of the motion of the flow tube. The sensors are typically positioned symmetrically with respect to the position of the applied oscillation with their signals being processed by appropriate circuitry.

Advantages of the present invention relate to the formation of a substantially flexible and free floating flow tube. A free floating flow tube which is substantially free of restrictions of constraints having a relatively long and flexible length increases the ability of the tubing to react to the Coriolis reaction of the fluid.

Another aspect of the present invention is the frequency of oscillation of the flow tube. Preferably, the present invention includes a free floating flow tube that is stabilized about its center of gravity and that is oscillated at a resonant frequency thereof higher than its fundamental resonant frequency. This relatively higher vibrational frequency creates wave or oscillation patterns along the flow tube length and forms nodes which isolate the flow tube from external influences which may effect the motion seen by the sensors. The nodes are local minimum amplitude positions which are substantially stationary in space and about which both sides of the flow tube appear to flex. The nodes define local maximum amplitudes of rotation within the flow, and thus create local reaction maximums within the Coriolis reaction gradient. Further, the contemplated vibrational wave pattern includes local maximums of vibration (i.e. translation) along its length. The nodal positions within the flow tube length permit the flow tube to oscillate about positions which are not rigidly mounted to the outside environment of the flow tube. This type of oscillation greatly enhances the sensitivity and accuracy of the meter.

Further advantages of the invention will become apparent to those skilled in the art by describing the preferred embodiment of the present invention. For the purpose of illustrating the invention, there is shown in the drawings a form which is presently preferred; it being understood, however, that this invention is not limited to the precise arrangements and instrumentalities shown.

### Brief description of the Drawings

Figure 1 shows the perspective view of a flow tube loop formed about a single axis and includes the resultant forces acting on a typical Coriolis mass flow meter.

Figure 2 shows the flow tube loop of Fig. 1 with an inlet and an outlet.

Figure 3 and Figure 4 show embodiments of the present invention.

Figure 5 shows a perspective view of a preferred embodiment of the present invention.

Figure 6 shows a top plan view of the embodiment shown in Figure 5.

Figure 7 shows a cross-sectional view of the embodiment shown in Figures 5 and 6 taken along line 7-7 in Figure 6.

Figure 8a, 8b and 8c show various vibrational patterns of the flow tube embodiment illustrated in Figures 5, 6 and 7.

Figure 9 shows a plan view of the vibrational pattern illustrated in Figure 8c.

Figure 10 is a side view illustrating the vibrational pattern shown in Figure 8c and Figure 9.

### Detailed Description of the Drawings

In the drawings, where like numerals illustrate like elements, there is shown a number of embodiments of a mass flow meter generally formed in conformance with the teachings of the present invention. The mass flow meter is generally referred to by the numeral 10 in each of the figures.

In Figure 1 there is shown a principal portion of a flow meter and specifically a circular shaped flow tube which is symmetrically formed about the X axis 12 and which substantially lies within the plane of the Y axis 14 and the Z axis 16. The flow meter 10 is illustrated having a mass flow (m) being directed through the loop with an oscillatory deflection applied at the crossing of the circular loop with the Y axis 14 and transverse to the direction of flow within the flow tube. In Figure 1, the maximum transverse velocity of the flow tube due to the applied oscillation is illustrated as VTₘₐₓ. The fluid flow in reacts in response to the transverse velocity VTₘₐₓ on opposite sides of the applied deflection with equal and opposite forces Fₘ, Fₘ'. These oppositely directed reaction forces Fₘ, Fₘ' of the fluid create a torque about the Y axis 14 which is illustrated as Tₘ.

Figure 2 shows a connection of the flow meter conduit 10 to a pipeline. The flow meter conduit 10 substantially includes a circular loop portion which is similar to that illustrated in Figure 1. The conduit 10 includes an inlet 18 and an outlet 20 which are substantially positioned along the X axis 12. It is contemplated that the X axis 12 is the axial line of the defined fluid stream or pipeline in which the flow meter conduit 10 is to be positioned. The inlet 18 and the outlet 20 are preferably fixed with respect to one another (not shown in Figure 2). The inlet 18 directs the fluid from the defined fluid stream to an inlet leg portion 22 which communicates with the loop portion 24 of the flow tube. The flow is deflected in the loop 24 through a 360° arc and is then exhausted into an outlet leg portion 26 which communicates between the loop 24 and the outlet 20.

In the embodiment shown in Figure 2, the inlet leg portion 22 and the outlet leg portion 26 are positioned substantially parallel to the Y axis 14. However, it is contemplated that the inlet leg portion 22 and the outlet leg portion 26 may take any form as desired including continuous curved portions so that the flow tube is generally spiraled about the X axis 12.

The loop portion is substantially free floating, that is free of restrictions of constraints throughout its length. The free floating portion of the flow tube also includes the inlet leg portion 22 and the outlet leg portion 26 so as to enhance the flexibility of the flow tube. The greater amount of curvature of the loop 24 as well as the greater unrestricted length of the flow tube which is able to flex in response to the Coriolis reaction force of the fluid will enhance the sensitivity of the flow tube and the ability of the sensors to determine the Coriolis reaction on the flow tube.

An embodiment of the flow meter 10 contemplated by the present invention is illustrated in Figure 3 and generally includes a symmetrical figure "8" form about the X axis 12 (when viewed along the X axis). The flow meter conduit 10 generally includes an inlet 28 and an outlet 30 which are positioned substantially along the X axis 12 and which are preferably fixed with respect to one another by mounting bracket 32. The fluid flow into the conduit 10 from the defined fluid stream (not shown) enters the inlet 28 and is deflected away from the X axis 12 by means of an inlet leg portion 34. Inlet leg portion 34 in the present embodiment substantially redirects the direction of flow from traveling along the X axis 12 to traveling substantially along the Z axis 16. From the inlet leg portion 34 the flow is directed through a first loop 36 which substantially forms an arc of about 270°. The first loop 36 is preferably formed within a single plane and, as shown, is within the plane formed by the Y axis 14 and the Z axis 16. The first loop 36 may be circular or oval in shape or as shown in Figure 3 may have a substantially straight portion 38 and curved portion 40. The first loop 36 communicates with crossing portion 42 which directs the flow along the Y axis 14 so that the fluid crosses the X axis 12 substantially perpendicular thereto. The crossing portion 42 communicates with a second loop 44 which is formed symmetrically on the opposite side of the X axis 12 from the first loop 36. Second loop 44 as illustrated also includes a curved portion 46 and straight portion 48. The straight portion 48 of loop 44 communicates with an outlet leg portion 50 which returns the flow from a position adjacent to the X axis 12 to redirect it substantially along the X axis 12 through the outlet 30.

The flow tube is oscillated by means of a driver 52 which is positioned substantially at the crossing of portion 42 with the axis 12. The driver imparts an oscillatory deflection to the flow within the crossing portion 42 substantially perpendicular to the Y axis 14 and directly along the X axis 12. The Coriolis reaction force of the fluid is measured by sensors 54 and 56 which are positioned on loops 36 and 44 respectively. The exact positioning of the sensors 54 and 56 will depend upon the formation of the loops and the nature of materials utilized in forming flow tube; the oscillation frequency of the driver; etc. The imparted oscillations of the driver 52 are not cantilevered with respect to the mounting of the continuous and free-floating flow tube and, therefore, the tubing is not rotated about its mounting. The inlet leg portion 34, the outlet leg portion 50 and the long and flexible flow tube having two loops 36 and 44 combined to provide flexibility which also substantially increases the sensitivity of the meter 10 to the Coriolis reaction. The flow tube formed symmetrically about the X axis 12 substantially stabilizes its oscillatory motion due to the Coriolis reaction and the applied oscillation of the driver 52 and reduces internal noise which may effect the mass flow determination.

The embodiment shown in Figure 4 illustrates a flow meter conduit 10 having two loops which are formed symmetrically about the Y axis and forms a "B"-shape when viewed along the X axis 12 (as opposed to the conduit shown in Figure 3 which substantially forms a figure "8"). The flow meter conduit 10 includes an inlet 58 and an outlet 60 which are, preferably, fixed with respect to one another (not shown) and positioned along the X axis 12. The continuous flow tube between the inlet and the outlet 58 and 60 is substantially free-floating. The fluid entering the inlet 58 is deflected through a first inlet leg portion 62 and a first loop 64. A crossing portion 66 which is substantially positioned along the Z axis 16 crosses the X axis 12 similar to crossing section 42 in the embodiment shown in Figure 3. The first loop 64 and the crossing portion 66 substantially combine to redirect the flow through approximately 270° turn in direction The fluid flow is directed from the crossing portion 66 into a second loop 68 which is substantially symmetrical with respect to the first loop 64 and directs the fluid flow into a outlet leg portion 70 and through the outlet 60.

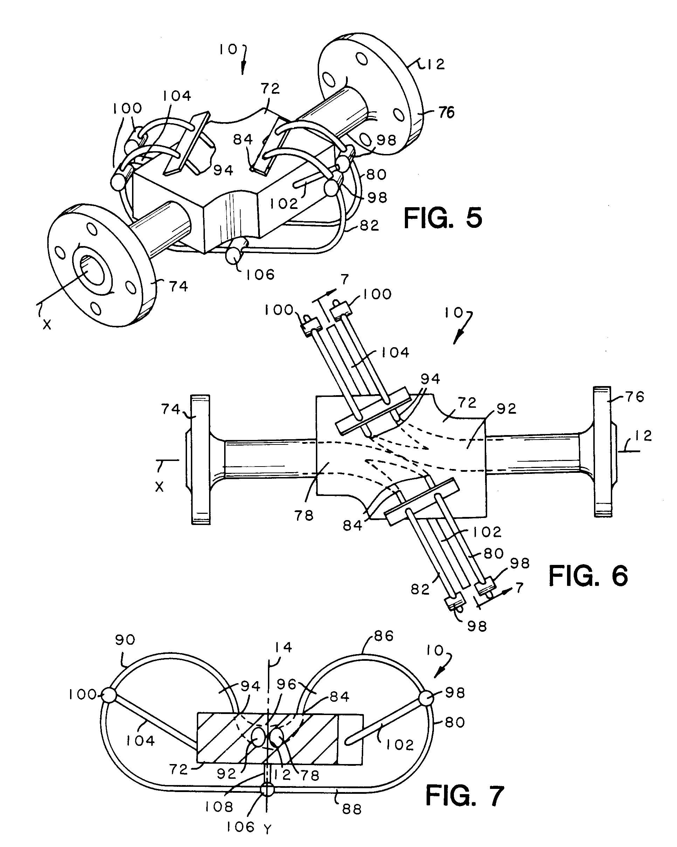

The embodiment in Figure 5 illustrates a variation of the B-shaped flow tube of Figure 4. In this embodiment, the long and flexible flow tube, which is substantially free of restrictions and constraints, is formed symmetrically about a central housing 72. The housing 72 includes an inlet 74 and an outlet 76 which generally form a flange for connection to the pipeline of the defined fluid stream (not shown). Both the inlet 74 and the outlet 76 are positioned substantially along the X axis 12. The inlet 74 and the outlet 76 communicate with internal channels within the housing 72 as illustrated in Figure 6. The inlet internal channel 78 generally forms a flow splitting manifold which divides the flow into equivalent portions and feeds two identical flow tubes 80 and 82. The two flow tubes 80, 82 are preferably positioned parallel with respect to one another at all points along their length. The communication between the flow tubes 80 and 82 and the internal channel 78 is also one of the mounting positions of the flow tubes 80, 82 to the housing 72 and the position is labelled 84.

One flow tube 80 will be described hereafter as illustrating both flow tube 80, 82 structures. The flow is directed from the internal channel 78 into the flow tube 80 and through a first continuous loop 86 which forms a arc of approximately 270°. After the flow completes the first loop 86, it is directed through straight section 88 which passes the Y axis 15 substantially perpendicular thereto (but need not be perpendicular to the X axis 12). The flow is directed from the straight section 88 into a second loop 90 also having an arc, as shown, of 270°. The flow is exhausted from the flow tube 80 into a second internal channel 92 at the second mounting 94 of the flow tube 80 on the housing 72. The second internal channel 92 forms a flow converging manifold within the housing 72 and exhausts the entire flow through the outlet 76 and back into the defined fluid stream.

The center of gravity 96 of the flow tube 80 is formed proximal to the mounting positions 84 and 94 of the flow tube 80. Additionally, this center of gravity 96 is positioned closely adjacent if not proximal to the X axis 12 or the axial line of the defined fluid stream as it passes through the central portion of the flow meter conduit 10. Sensors 98 and 100 are positioned on loops 86 and 90 respectively and as illustrated in Figures 5 and 6 may be mounted directly to each loop 86 and 90 on each of the flow tubes 80 an 82 or may be mounted on mounting brackets 102, 104 projecting from the housing 72. A driver 106 is positioned at the crossing of the straight portion 88 with the Y axis 14. The driver 106 may also be mounted from a mounting bracket 108 extending from housing 72 or as desired. Driver 105 preferably oscillates the two flow tubes 80, 82 in opposite directions with each driving stroke creating a reaction as seen by sensors 98, 100 that is substantially twice that of the reaction a single flow moving through a single flow tube 80 or 82.

The center of gravity 96 of both flow tubes 80, 82 is positioned closely adjacent or proximal to its mounting positions 84 and 94 which stabilizes its motion such that the effect of external and internal noise on the Coriolis reaction sensing is substantially reduced. External noise will not significantly contaminate the sensing of the Coriolis reaction as seen by the sensors 98, 100 and the flow tube 80 provides a more stable environment for determining the Coriolis reaction from the applied oscillation of the driver 96; therefore, enhancing the mass flow calculation and the accuracy of the meter 10. Additionally, the flexible flow tube structure along with the stabilized formation permits the tubing to be provided in a relatively heavier thickness without substantially reducing the overall sensitivity of the meter. Heavier tubing typically reduces the flexibility of the flow tube and, thus, reduces the magnitude of the tube deflection in response to the Coriolis reactions of the fluid. However, the overall accuracy of the meter 10 will not be sacrificed by the conduit 10 of the present invention since the measured reactions are essentially immune to external noise due to the stability of the flow tube about its mountings 84 and 94. The increase in wall thickness of the flow tubes 80 and 82 increases the overall strength and longevity of the meter 10 and permits the meter 10 to be utilized with fluids under a relatively higher pressure than typically know Coriolis type flow meters while increasing the overall safety and operation of the meter 10 without sacrificing sensitivity.

The driver 106 is illustrated in Figure 7 (as well as the driver 52 in Figure 3 and those contemplated for use in the embodiment shown in Figure 4) typically oscillates the flow tube at its fundamental natural resonant vibrational frequency. However, it has been determined that by driving a flow tube at a resonant frequency higher than the fundamental resonant frequency, the accuracy of the flow meter readings may be enhanced. The typical vibrational pattern of the flow tube 80, as illustrated in Figures 5 - 7, when driven at the fundamental vibrational frequency is illustrated in Figure 8a.

Figure 8b illustrates a typical vibrational pattern of the flow tube 80 in response to a vibrational frequency which is at a higher resonant frequency than the fundamental resonance (illustrated in Figure 8a). This higher frequency generally forms a node 110 within the vibrational pattern which appears to be substantially stationary with respect to the other portions of the flow meter tubing. The node is a local minimum of amplitude vibration which essentially forms a pivot or joint which is comparable to a ball and socket joint having extension portions extending from both sides of the ball within the socket. The flow tube oscillates about its fixed ends 84, 94 and the node 110 although it is substantially free floating along its continuous length.

In Figure 8c the vibrational pattern of a higher resonant frequency is illustrated, as compared to that shown in Figures 8a and 8b. The flexible flow tube 80 oscillates with a wave pattern at this higher frequency to form substantially two nodes or local minimum amplitudes of vibration 112 and 114. As illustrated in Figures 9 and 10, a fluid particle M which is moving through a loop portion of the conduit with respect to the node 114 experiences a Coriolis reaction force which is measured about an axis which is not dependent on the fixed mounting 94 due to the presence of the node 114. The node 114 is free of its attachment to external structures and is formed as a function of the vibration pattern only and is immune to external vibrations which are communicated through the housing structure. By forming nodes within the tube length in this manner and sensing the Coriolis reaction of opposite loops, the reaction of the flow tue is made more immune to external noise as compared to fundamental oscillation of the same tubing. This noise immunity is created by the shock absorbing effect of the node. Additionally, this vibrational frequency is substantially higher than the normal natural fundamental frequency of the flow tube which is typically much closer related to the vibration frequencies of external machinery which may effect the typical flow meter conduits.

## Claims

1. Apparatus (10) for measuring mass flow of a fluid stream in a pipeline, comprising
- a central housing or bracket (72, 32) for fixing - with respect to one another - an inlet (74, 58, 28) and a outlet (76, 60, 30) which are positioned for connection to the pipeline substantially along the axis (12, X) of the pipeline;
- an inlet channel or inlet leg portion (78, 62, 34) which deflects the fluid stream away from the axis (12, X) of the pipeline;
- an outlet channel or outlet leg portion (92, 70, 50) which redirects the fluid stream along the axis (12, X) of the pipeline;
and further comprising a continuous, flexible, substantially free-floating flow tube (80, "B", "8"), which is attached to the central housing or bracket (72, 32)
and has in a predetermined plane
- a first curved portion (86, 64, 36+38) which deflects the fluid stream for about 270° turn in direction,
- a straight connecting portion (88, 66, 42) extending from said first curved portion (86, 64, 36+ 38) adjacent the axis (12, X) of the pipeline to a second curved portion (90, 68, 46+48),
- the second curved portion (90, 68, 46+48) deflecting the fluid stream for about 270° turn in direction;
and further comprising
- driving means (106, 52) adapted to impart an oscillation to the flow tube (80, "B", "8") perpendicular to the flow within the flow tube (80, "B", "8");
- and means for sensing (98, 100, 54, 56) the deflections of the flow tube (80, "B", "8") in response to the Coriolis reaction of the fluid stream to the imparted oscillation.

2. Apparatus according to claim 1,
further comprising a second flow tube (82) having the structure of said continuous, flexible, substantially free-floating flow tube (80).

3. Apparatus according to claim 2,
the two flow tubes (80, 82) being positioned parallel with respect to one another.

4. Apparatus according to claim 2 or 3,
the inlet channel (78) and the outlet channel (92) forming a flow splitting manifold (at 84) and flow converging manifold (at 94).

5. Apparatus according to one of the claims 1 - 4,
the predetermined plane of the flow tube (80) or the flow tubes (80, 82) being positioned substantially transverse to the axis (12,X) of the pipeline.

6. Apparatus according to one of the claims 1 - 4,
the predetermined plane of the flow tube (80) or the flow tubes (80, 82) being positioned non-perpendicular with respect to the axis (12,X) of the pipeline.

7. Apparatus according to one of the claims 1 - 6,
the first curved portion (86, 64) and the second curved portion (90, 98) being formed symmetrically ("B") about an axis (14,Y) in the predetermined plane of the flow tube (80) or the flow tubes (80, 82).

8. Apparatus according to one of the claims 1 - 6,
the first curved portion (36 + 38) and the second curved portion (46 + 48) being formed symmetrically ("8") on opposite sides of the axis (12,X) of the pipeline.

9. Apparatus according to one of the claims 2 - 8,
said driving means (106, 56) preferably oscillating the flow tubes (80, 82) in opposite directions.

10. Apparatus according to one of the claims 1 - 9,
said driving means (106, 52) oscillating the flow tube (80) or the flow tubes (80, 82) at its fundamental resonant frequency.

11. Apparatus according to one of the claims 1 - 9,
said driving means (106, 52) oscillating the flow tube (80) or the flow tubes (80, 82) at a higher frequency than its fundamental resonant frequency, so as to produce a vibrational wave pattern along the length of each flow tube (80, 82) and create at least one node (110, 112, 114) within the wave pattern of each flow tube (80, 82), each node (110, 112, 114) defining a local minimum amplitude of vibration with the remaining portions of each flow tube (80, 82) oscillating about the nodes (110, 112, 114).

12. Apparatus according to claim 11,
wherein the sensing means generate signals representative of the motion of each flow tube (80, 82) between a node (110) and the inlet and the outlet end (84, 94), respectively.

13. Apparatus according to claim 11,
wherein at least two nodes (112, 114) are created within the length of each flow tube (80, 82) by the perpendicular oscillation of the driver (106), the driver (106) being adapted to oscillate each flow tube (80, 82) at its second harmonic resonant frequency.

14. Apparatus according to one of the claims 1 - 13,
the center of gravity (96) of the flow tube (80) or the flow tubes (80, 82) being formed closely adjacent or proximal to the axis (12,X) of the pipeline.

15. Apparatus according to one of the claims 1 - 14,
wherein the ends of the flow tube (80) or the flow tubes (80, 82) are fixedly attached to the housing (72) at a position (84, 94) juxtaposed to one another.

## Patentansprüche

1. Vorrichtung (10) zum Messen des Massenflusses eines Fluidstroms in einer Röhre, umfassend
- ein zentrales Gehäuse oder eine Klammer (72, 32) zum gegenseitigen Fixieren eines Einlasses (74, 58, 28) und eines Auslasses (76, 60, 30), die zwecks Anschlusses an die Rohre im wesentlichen längs der Achse (12, X) der Röhre ausgerichtet sind;
- einen Einlaßkanal oder einen Einlaßbogen (78, 62, 34) der den Fluidstrom von der Achse (12, X) der Röhre weglenkt;
- einen Auslaßkanal oder Auslaßbogen (92, 70, 50) der den Fluidstrom in eine Richtung längs der Achse (12, X) der Röhre zurücklenkt;
und ferner umfassend einen durchgehenden, flexiblen, im wesentlichen freibeweglichen Schlauch (80, "B", "8") der an dem zentralen Gehäuse oder der Klammer (72, 32) angebracht ist
und in einer vorbestimmten Ebene aufweist:
- einen ersten gekrümmten Abschnitt (86, 64, 36+38), der den Fluidstrom um etwa 270° Richtungswechsel ablenkt,
- einen geradlinigen Verbindungsabschnitt (88, 66, 42), der sich von dem ersten gekrümmten Abschnitt (86, 64, 36+38) in der Nachbarschaft der Achse (12, X) der Röhre bis zu einem zweiten gekrümmten Abschnitt (90, 68, 46+48) erstreckt,
- wobei der zweite gekrümmte Abschnitt (90, 68, 46+48) den Fluidstrom um etwa 270° Richtungswechsel ablenkt;
und ferner umfassend:
- einen Antrieb (106, 52), der sich dazu eignet, dem Schlauch (80, "B", "8") eine Schwingung senkrecht zu der Strömung innerhalb des Schlauchs (80, "B", "8") aufzuprägen;
- und eine Vorrichtung zum Erfassen der Auslenkungen (98, 100, 54, 56) des Schlauchs (80, "B", "8"), die sich als Antwort auf die Coriolisreaktion des Fluidstroms auf die aufgeprägte Schwingung einstellen.

2. Vorrichtung nach Anspruch 1, ferner umfassend einen zweiten Schlauch (82), der die Struktur des besagten durchgehenden, flexiblen, im wesentlichen freibeweglichen Schlauch (80) aufweist.

3. Vorrichtung nach Anspruch 2, in der die beiden Schläuche (80, 82) parallel zueinander liegen.

4. Vorrichtung nach Anspruch 2 oder 3, in welcher der Einlaßkanal (78) und der Auslaßkanal (92) einen Strömungsteiler (bei 84) und einen Strömungsvereiniger (bei 94) bilden.

5. Vorrichtung nach einem der Ansprüche 1 bis 4, in der die vorbestimmte Ebene des Schlauchs (80) oder der Schläuche (80, 82) im wesentlichen quer zu der Achse (12, X) der Röhre liegt.

6. Vorrichtung nach einem der Ansprüche 1 bis 4, in der die vorbestimmte Ebene des Schlauchs (80) oder der Schläuche (80, 82) nicht senkrecht zu der Achse (12, X) der Röhre liegt.

7. Vorrichtung nach einem der Ansprüche 1 bis 6, in welcher der erste gekrümmte Abschnitt (86, 64) und der zweite gekrümmte Abschnitt (90, 98) symmetrisch ("B") zu einer Achse (14, Y) in der vorbestimmten Ebene des Schlauchs (80) oder der Schläuche (80, 82) ausgebildet sind.

8. Vorrichtung nach einem der Ansprüche 1 bis 6, in welcher der erste gekrümmte Abschnitt (36+38) und der zweite gekrümmte Abschnitt (46+48) symmetrisch ("8") auf gegenüberliegenden Seiten der Achse (12, X) der Röhre ausgebildet sind.

9. Vorrichtung nach einem der Ansprüche 2 bis 8, in welcher der Antrieb (106, 56) die Schläuche (80, 86) vorzugsweise in entgegengesetzte Richtungen schwingen laßt.

10. Vorrichtung nach einem der Ansprüche 1 bis 9, in welcher der Antrieb (106, 52) den Schlauch (80) oder die Schläuche (80, 82) in ihrer Grundresonanzfrequenz schwingen läßt.

11. Vorrichtung nach einem der Ansprüche 1 bis 9, in welcher der Antrieb (106, 52) den Schlauch (80) oder die Schläuche (80, 82) bei einer höheren als der Grundresonanzfrequenz schwingen läßt, um ein Schwingungswellenmuster längs jedes Schlauchs (80, 82) herzustellen und um mindestens einen Knoten (110, 112, 114) innerhalb des Wellenmusters jedes Schlauches (80, 82) zu schaffen, wobei jeder Knoten (110, 112, 114) eine örtliche minimale Amplitude der Schwingung festlegt und die restlichen Abschnitte jedes Schlauchs (80, 82) um die Knoten (110, 112, 114) schwingen.

12. Vorrichtung nach Anspruch 11, in der die Sensorvorrichtung Signale erzeugt, welche die Bewegung jedes Schlauchs (80, 82) zwischen einem Knoten (107) und dem Einlaßende (84) bzw. dem Auslaßende (94) repräsentieren.

13. Vorrichtung nach Anspruch 11, in welcher mindestens zwei Knoten (112, 114) innerhalb der Länge jedes Schlauchs (80, 82) geschaffen werden mittels der senkrechten Schwingung des Antriebs (106), wobei der Antrieb (106) dafür tauglich ist, jeden Schlauch (80, 82) bei der zweiten Harmonischen der Resonanzfrequenz schwingen zu lassen.

14. Vorrichtung nach einem der Ansprüche 1 bis 13, in der der Schwerpunkt (96) des Schlauchs (80) oder der Schläuche (80, 82) eng benachbart bzw. in der Nähe der Achse (12, X) der Röhre ausgebildet ist.

15. Vorrichtung nach einem der Ansprüche 1 bis 14, in der die Enden des Schlauchs (80) oder der Schläuche (80, 82) fest am Gehäuse (72) in benachbarter Lage (84, 94) angebracht sind.

## Revendications

1. Dispositif (10) pour mesurer le débit massique d'un courant de fluide dans un pipeline, comprenant
- une console ou boîtier central (72, 32) pour fixer - l'une par rapport à l'autre - une entrée (74, 58, 28) et une sortie (76, 60, 30) qui sont placées pour être reliées au pipeline essentiellement le long de l'axe (12, X) du pipeline ;
- une conduite d'entrée ou partie formant branche d'entrée (78, 62, 34) qui dévie le courant de fluide en éloignement de l'axe (12, X) du pipeline ;
- une conduite de sortie ou partie formant branche de sortie (92, 70, 50) qui réoriente le courant de fluide le long de l'axe (12, X) du pipeline ;
et comprenant en outre un tube d'écoulement (82, "B", "8") continu, flexible et essentiellement libre de flotter, qui est relié à la console ou boîtier central (72, 32)
et qui possède dans un plan prédéterminé
- une première partie courbée (86, 64, 36+38) qui dévie le courant de fluide en faisant tourner sa direction d'environ 270°,
- une partie rectiligne de liaison (88, 68, 42) s'étendant depuis la première partie courbée (86, 64, 36+38) en position adjacente à l'axe (12, X) du pipeline jusqu'à une seconde partie courbée (90, 68, 46+48),
- la seconde partie courbée (90, 68, 46+48) déviant le courant de fluide en faisant tourner sa direction d'environ 270° ;
et comprenant en outre
- des moyens d'entraînement (106, 52) conçus de manière à appliquer une oscillation au tube d'écoulement (80, "B", "8") perpendiculairement à l'écoulement dans ce tube d'écoulement (80, "B", "8") ;
- et des moyens pour mesurer (98, 100, 54, 56) les déviations du tube d'écoulement (80, "B", "8") en réponse à la réaction de Coriolis du courant de fluide à l'oscillation appliquée.

2. Dispositif selon la revendication 1,
comprenant en outre un second tube d'écoulement (82) ayant la structure dudit tube d'écoulement (80) continu, flexible et essentiellement libre de flotter.

3. Dispositif selon la revendication 2,
où les deux tubes d'écoulement (80, 82) sont placés parallèlement l'un par rapport à l'autre.

4. Dispositif selon la revendication 2 ou 3,
où la conduite d'entrée (78) et la conduite de sortie (92) forment un distributeur pour fractionner l'écoulement (en 84) et un collecteur pour faire converger les écoulements (en 94).

5. Dispositif selon l'une des revendications 1 à 4,
où le plan prédéterminé du tube d'écoulement (80) ou des tubes d'écoulement (80, 82) est disposé essentiellement transversalement à l'axe (12, X) du pipeline.

6. Dispositif selon l'une des revendications 1 à 4,
où le plan prédéterminé du tube d'écoulement (80) ou des tubes d'écoulement (80, 82) est disposé non perpendiculairement par rapport à l'axe (12, X) du pipeline.

7. Dispositif selon l'une des revendications 1 à 6,
où la première partie courbe (86, 64) et la seconde partie courbe (90, 98) sont formées symétriquement ("B") par rapport à un axe (14, Y) dans le plan prédéterminé du tube d'écoulement (80) ou des tubes d'écoulement (80, 82).

8. Dispositif selon l'une des revendications 1 à 6,
où la première partie courbe (36+38) et la seconde partie courbe (46+48) sont formées symétriquement ("8") sur des côtés opposés de l'axe (12, X) du pipeline.

9. Dispositif selon l'une des revendications 2 à 8,
où lesdits moyens d'entraînement (106, 56) font de préférence osciller les tubes d'écoulement (80, 82) dans des sens opposés.

10. Dispositif selon l'une des revendications 1 à 9,
où lesdits moyens d'entraînement (106, 52) font osciller le tube d'écoulement (80) ou les tubes d'écoulement (80, 82) sur la fondamentale de sa fréquence de résonance.

11. Dispositif selon l'une des revendications 1 à 9,
où lesdits moyens d'entraînement (106, 52) font osciller le tube d'écoulement (80) ou les tubes d'écoulement (80, 82) à une fréquence plus élevée que la fondamentale de sa fréquence de résonance, afin de produire un diagramme vibratoire ondulatoire le long de chaque tube d'écoulement (80, 82) et créer au moins un noeud (110, 112, 114) dans le diagramme ondulatoire de chaque tube d'écoulement (80, 82), chaque noeud (110, 112, 114) définissant un minimum local d'amplitude de vibration, les autres parties de chaque tube d'écoulement (80, 82) oscillant autour des noeuds (110, 112, 114).

12. Dispositif selon la revendication 11,
dans lequel les moyens de mesure produisent des signaux représentatifs du mouvement de chaque tube d'écoulement (80, 82) entre un noeud (110) et l'extrémité d'entrée et de sortie (84, 94), respectivement.

13. Dispositif selon la revendication 11,
dans lequel on crée au moins deux noeuds (112, 114) sur la longueur de chaque tube d'écoulement (80, 82) par oscillation perpendiculaire de l'entraîneur (106), l'entraîneur (106) étant conçu de manière à faire osciller chaque tube d'écoulement (80, 82) sur l'harmonique de sa fréquence de résonance.

14. Dispositif selon l'une des revendications 1 à 13,
où le centre de gravité (96) du tube d'écoulement (80) ou des tubes d'écoulement (80, 82) est disposé en un point très voisin de l'axe (12, X) du pipeline ou en un point proximal par rapport à cet axe.

15. Dispositif selon l'une des revendications 1 à 14,
dans lequel les extrémités du tube d'écoulement (80) ou des tubes d'écoulement (80, 82) sont fixement reliées au boîtier (72) en une position (84, 94) où elles se trouvent juxtaposées l'une à l'autre.
